# EUROPEAN PATENT APPLICATION

(11) **EP 4 772 849 A1**
(43) Date of publication of application: **08.07.2026**
(21) Application number: 25194929.3
(22) Date of filing: 08.08.2025
(51) Int. Cl.: G01M 5/00, G01M 3/28, F16L 23/16, E04H 12/08

(54) **APPARATUS AND METHOD FOR SEALING AND MONITORING A BOLTED FLANGE JOINT**

(30) Priority: 08.08.2024 GB 202411723
(71) Applicant: Haritou, Christos Sotirious, Redcar Cleveland TS11 8HS (GB); Fada, Alan, Tyne and Wear NE37 1BU (GB)
(72) Inventor: Haritou, Christos Sotirious, Redcar Cleveland TS11 8HS (GB); Fada, Alan, Tyne and Wear NE37 1BU (GB)
(74) Representative: Elsworth, Dominic Stephen

(57) **Abstract**

Bolted flange joint sealing and monitoring apparatus is disclosed for a bolted flange joint comprising two flanges abutting one another at an interface, each flange having a series of holes therein, the holes of the two flanges of the joint aligned and receiving a bolt therein, and the abutting flanges providing an inner surface and an outer surface. The sealing and monitoring apparatus provides a seal on the inner surface of the interface. The sealing and monitoring apparatus includes: a first, frangible, sealant applied to the interface on the inner surface; a first layer of sheet material overlying the first sealant and adapted to provide an air space; a second layer of sheet material overlying the first layer of sheet material; a second sealant overlying the second layer such that the air space is air tight; a vacuum source in fluid communication with the air space; and vacuum monitoring means to monitor the status of a vacuum created in the air space.

## Description

### Field of the Invention

The present invention relates to bolted flange joints and in particular to an apparatus and method for sealing such a joint and which provides for monitoring of the integrity of the seal and the joint.

### Background of the Invention

Bolted flange joints are used widely, usually for joining together hollow structures such as sections of pipes or tube. Often hollow structures have a circular cross-section although this is not always the case.

Wind turbine towers are often made from a plurality of hollow structural sections that are mounted one on top of another and fastened together. Whilst fastening of one hollow structural section to another may be by welding, a bolted flange joint is often preferred.

In a wind turbine tower the bolted flange joints must be capable of withstanding very large forces. As a result flanges are typically between 50 and 170mm thick and bolts are fastened with great torque.

In a bolted flange joint of a wind turbine tower a series of holes are provided in each flange, the holes in each flange are aligned, and bolts passed through aligned holes in adjacent flanges.

For the continued safe operation of the wind turbine it is essential that if there is a fault at one of the bolted flange joints it is detected early so that the fault may be repaired. A typical fault would involve a bolt failing. If one bolt fails, the bolts immediately adjacent the failed bolt are placed under an increased load, and if one of those bolts fails the bolts immediately adjacent those failed bolts are placed under a still greater load.

Wind turbines are often located in harsh environments, such as at sea or in mountainous areas, and may be exposed to driving rain, and when offshore, sea water in the form of waves and sea spray. It is therefore necessary to monitor the integrity of the bolted flange joint.

In order to detect faults in bolted flanges of wind turbine towers a rigorous visual inspection regime is followed, with technicians entering the wind turbine towers and inspecting the joints at regular intervals. If a failed or failing bolt or water ingress is detected, remedial action is taken. This may comprise replacing suspect bolts and/or fixing the outer cover.

It is possible to monitor bolts remotely. WO2020/141333, to the current applicant, describes apparatus for sealing and monitoring a bolted flange joint comprising two flanges abutting one another at an interface, the interface having an inner surface and an outer surface. The interface is sealed on each of the inner and outer surfaces, and an air tight space is created which is in fluid communication with a vacuum source. Vacuum monitoring means is used to monitor the status of the vacuum and hence the integrity of the joint.

Wind turbines can be well over 100m tall and working at height on the exterior of the tower to apply sealant to the outer surface of the bolted flange joint may not be feasible. It would be therefore be desirable to provide an improved apparatus and method for sealing a bolted flange in which it is not necessary to seal the outer surface of the bolted flange interface.

### Summary of the Invention

According to an aspect of the invention there is provided a combination of a bolted flange joint sealing and monitoring apparatus and a bolted flange joint, the bolted flange joint comprising two flanges abutting one another at an interface, each flange having a series of holes therein, the holes of the two flanges of the joint aligned and receiving a bolt therein, and the abutting flanges providing an inner surface and an outer surface, wherein the sealing and monitoring apparatus provides a seal on the inner surface of the interface, and wherein the sealing and monitoring apparatus includes:
a) a first sealant applied to the interface on the inner surface, sealing said interface;
b) a first layer of sheet material overlying the first sealant and an area of the abutting flanges surrounding the sealed interface on the inner surface, the first layer of sheet material adapted to provide an air space;
c) a second layer of sheet material overlying the first layer of sheet material;
d) a second sealant overlying the second layer of sheet material such that the air space is air tight;
e) a vacuum source in fluid communication with the air space; and
f) vacuum monitoring means configured to monitor the status of a vacuum created in the air space;
wherein the first sealant is a frangible sealant.

Preferably, the interface is sealed only on the inner surface.

Preferably, a frangible sealant is a sealant with a tensile strength at 20 degrees centigrade of: 50MPa or less; 20MPa out less; 13MPa or less and/or 10MPa or greater.

The bolted flange joint sealing and monitoring apparatus may further comprise a third layer of sheet material situated between the first and second layers of sheet material. The third layer of sheet material may be a fluid impervious foil. The foil may be an aluminium foil, or a plastics foil.

The bolted flange joint sealing and monitoring apparatus may further comprise a fourth layer of sheet material situated between the first layer of sheet material and the area of abutting flanges surrounding the interface, wherein the fourth layer of sheet material is attached to the sealant by adhesive. The fourth layer of sheet material may either be covered on opposing faces thereof with adhesive, or may be impregnated with adhesive such that the opposing faces thereof have adhesive thereon.

At least one face of the third layer of sheet material may be covered with adhesive.

Advantageously, the second layer of sheet material is a cloth. The cloth may be a glass fibre cloth.

Preferably, one side of the second layer of sheet material is covered with adhesive.

It is preferred that the peripheral edge of the first layer lies inside the peripheral edge of the second sealant overlying the second layer of sheet material.

The peripheral edge of the second layer of sheet material may be co-terminus with the peripheral edge of the first layer of sheet material or may extend beyond the peripheral edge of the first layer of sheet material.

The peripheral edge of the third layer of sheet material may be co-terminus with the peripheral edge of the first layer of sheet material or may extend beyond the peripheral edge of the first layer of sheet material.

The peripheral edge of the fourth layer of sheet material may be co-terminus with the peripheral edge of the first layer of sheet material or may extend beyond the peripheral edge of the first layer of sheet material.

The first sealant may enter a gap between opposing faces of the two abutting flanges.

An inner edge of at least one of the abutting flanges may be recessed and the recess may be a chamfer. The inner edge of each flange may be recessed and each recess may be a chamfer.

The sealant may be applied to the interface as a bead.

The bead is may be up to 2mm wide and/or up to 2mm deep and may be between 1mm wide and/or 1mm deep.

The bead of first sealant may be situated in a space between the abutting flanges formed by the or each recessed edge or edges.

The second sealant is preferably a fluid impermeable sealant.

According to a further aspect of the invention, there is provided a structure comprising two structural elements and the combination of a bolted flange joint sealing and monitoring apparatus and a bolted flange joint as hereinbefore defined, the bolted flange joint connecting the structural elements.

The structure may comprise three or more structural elements and a plurality of bolted flange joints, wherein each two adjacent structural elements of the three or more structural elements are connected together by a respective bolted flange joint, and wherein the air spaces provided by each respective sealing and monitoring apparatus are isolated from one another.

According to a further aspect of the invention, there is provided a method of fabricating a bolted flange joint sealing and monitoring apparatus on a bolted flange joint, the bolted flange joint comprising two flanges abutting one another at an interface, each flange having a series of holes therein, the holes of the two flanges of the joint aligned and receiving a bolt therein, and the abutting flanges providing an inner surface and an outer surface, the method comprising the steps of:
a) preparing inner surfaces of abutting flanges of a bolted flange joint;
b) applying a first sealant to the interface on the inner surface, sealing said interface, wherein the first sealant wherein the first sealant is a frangible sealant;
c) attaching a first layer of sheet material to the prepared inner surface, overlying the interface sealed by the first sealant following step b), wherein the first layer of sheet material is adapted to provide an air space;
d) attaching a second layer of sheet material such that it overlies the first layer of sheet material;
e) applying a layer of a second sealant over the second layer of sheet material, the layer of second sealant extending over the prepared flange surface to each side of the interface such that the air space provided by the first layer of sheet material is air tight; and
f) connecting a vacuum source to the air tight space formed about the first layer of sheet material.

A thickness of between 1mm and 2mm of second sealant may be applied to the interface in step e).

The first sealant in step b) may have a tensile strength of the first sealant has a tensile strength at 20 degrees centigrade of: 50MPa or less; 20MPa out less; 13MPa or less and/or 10MPa or greater.

The method may further include the step of applying formers to the inner surface of the bolted flange joint prior to step e) to control the thickness of the layer of second sealant. Use of formers allows a uniform thickness of second sealant to be applied.

Advantageously, the method includes the step of preparing the surface of the bolted flange joint includes the step of repairing the bolted flange joint.

The method may comprise the further step of applying a third layer of sheet material between the first and third layers of sheet material.

The method may comprise the further step of applying a fourth layer of sheet material between the surface of the sealant applied to the prepared surface around the bolted flange joint and the first layer of sheet material.

According to a further aspect of the invention, there is provided a method of sealing and monitoring a bolted flange joint comprising the steps of forming the combination of a bolted flange joint sealing and monitoring apparatus and a bolted flange joint as hereinbefore defined, and monitoring the status of a vacuum in the bolted flange joint monitoring apparatus.

The method of sealing and monitoring a bolted flange joint may comprise the further step of relaying the detected status of the vacuum to a remote monitoring station.

### Brief Description of the Drawings

In the Drawings, which illustrate bolted flange joints and structures including such joints, and are by way of example:
Figure 1 is a schematic illustration of a part of a bolted flange joint;
Figure 2 is a schematic illustration of two types of flange joint;
Figure 3 is a schematic illustration of part of a wind turbine tower having bolted flange joints provided with a sealing and monitoring apparatus according to the invention;
Figure 4 is an exploded view of the components of the bolted flange sealing and monitoring apparatus shown in Figure 3;
Figure 5a is a schematic illustration of a bolted flange joint with parts of the bolted flange sealing and monitoring apparatus applied, the joint having formers applied prior to application of a second sealant;
Figure 5b is a schematic cross-section of the bolted flange joint of Figure 5a;
Figure 5c is a schematic cross-section of the bolted flange joint 5a, after application of a second sealant; and

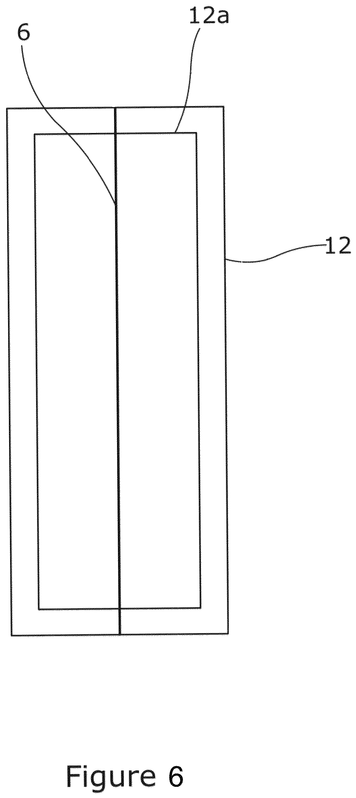

Figure 6 is a plan view of a bolted flange joint with some of the components of the bolted flange sealing and monitoring apparatus attached thereto.

### Detailed Description of the Preferred Embodiments

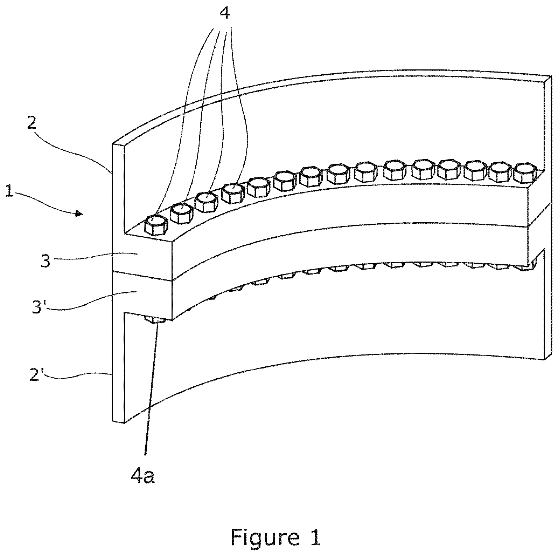

Referring now to Figure 1, a structure 1 comprises two structural elements 2, 2' each including a flange 3, 3'. The flanges 3, 3' include holes (not shown) which are aligned and which receive bolts 4 secured with nuts 4a.

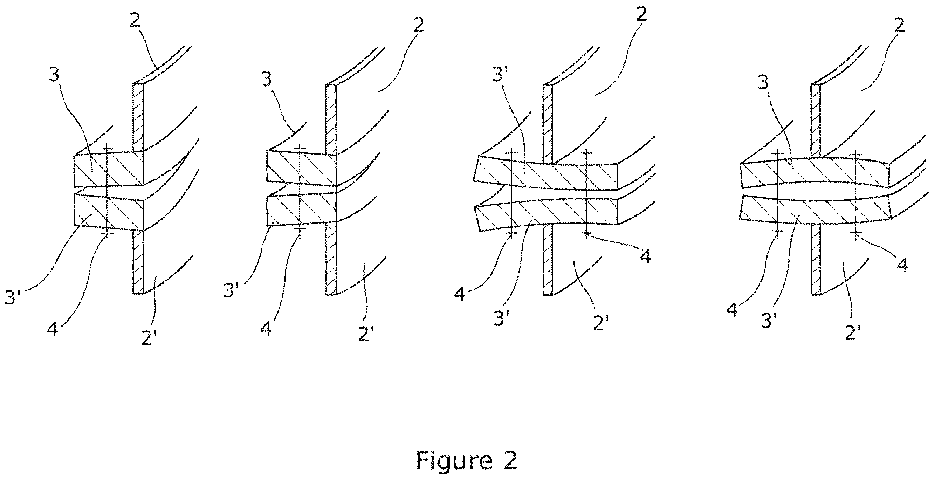

Figure 2 illustrates two views of an L-shaped flanged joint and two views of a T-shaped flanged joint. Each view illustrates and exaggerated form of bowing of the flanges 3, 3' representing how the flatness of a flange may deviate from being completely flat. In the case of wind turbine towers, the extent of deviation in flatness may be 2.00mm over the total circumference and 1.00mm over a segment of 30 degrees where a particular area of the tower wall is critical.

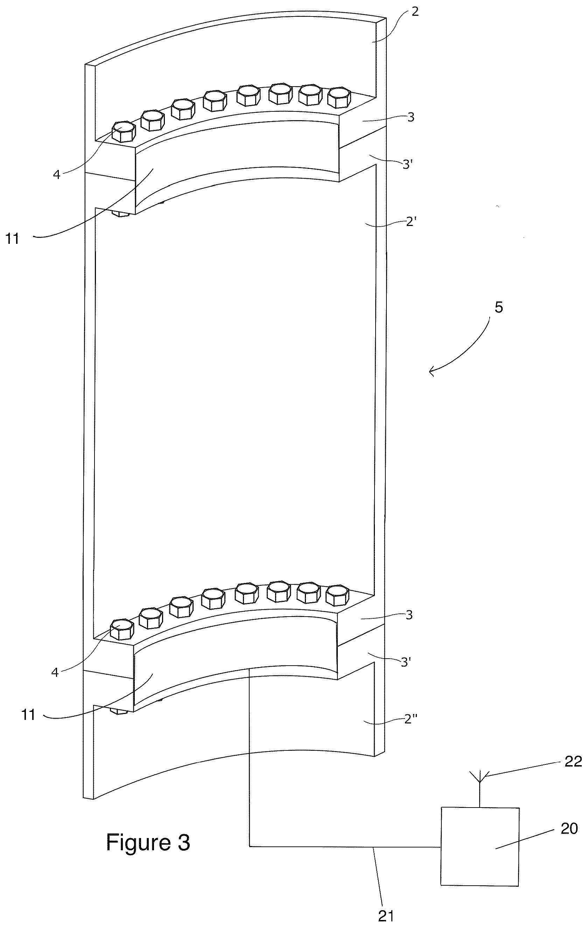

Figure 3 illustrates part of the interior of an assembled tower 5, which comprises structural elements 2, 2', 2". Each structural element 2, 2', 2" has flanges 3, 3' which form an interface 6 where they abut. The structural elements 2, 2', 2" are joined together by bolts 4. The interface 6 between the structural elements 2, 2', 2" is also enclosed by a structure 11, described in greater detail below. The structure 11 is connected to a vacuum monitoring apparatus 20 by pipe 21. The vacuum monitoring apparatus 20 subjects the inside of the structure to a negative pressure and monitors that negative pressure constantly. The vacuum monitoring apparatus 20 also includes a transmitter 22 for transmitting data indicative of the status of the negative pressure at a preset sampling rate, for example once a second. The apparatus may also include a data recording means.

The apparatus of the invention monitors the condition of the bolts 4 by monitoring the status of a vacuum in the region of the bolts 4. If a bolt has failed or stretched by a certain amount a gap will develop between the flanges 3, 3'.

In order to provide a space which can be subjected to a vacuum it is necessary to first apply a first sealant 7 to the interface 6 on the inside surface. It is important that this first sealant will break under a given pressure. If a bolt 4 fractures or is stretched beyond its elastic limit, the structural elements 2, 2' may move relative to one another, as illustrated in Figure 2. If the movement is sufficient to break the sealant 7 or the structure 11, the vacuum will fail and an alarm will be triggered. Given the nature of the structures and the environments in which they are place, it is inevitable that there will be some small movement at the interface 6 if a bolt 4 fractures or is stretched beyond its elastic limit.

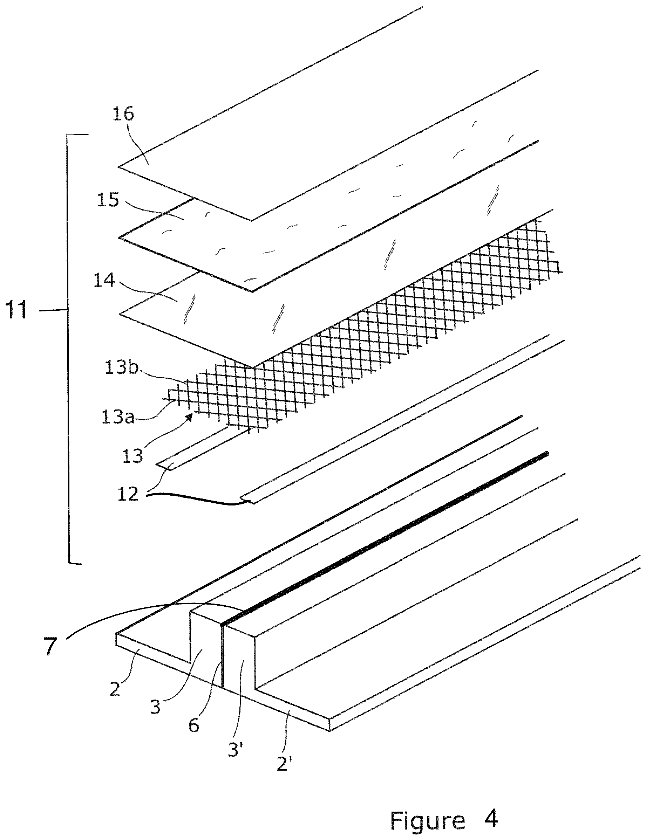

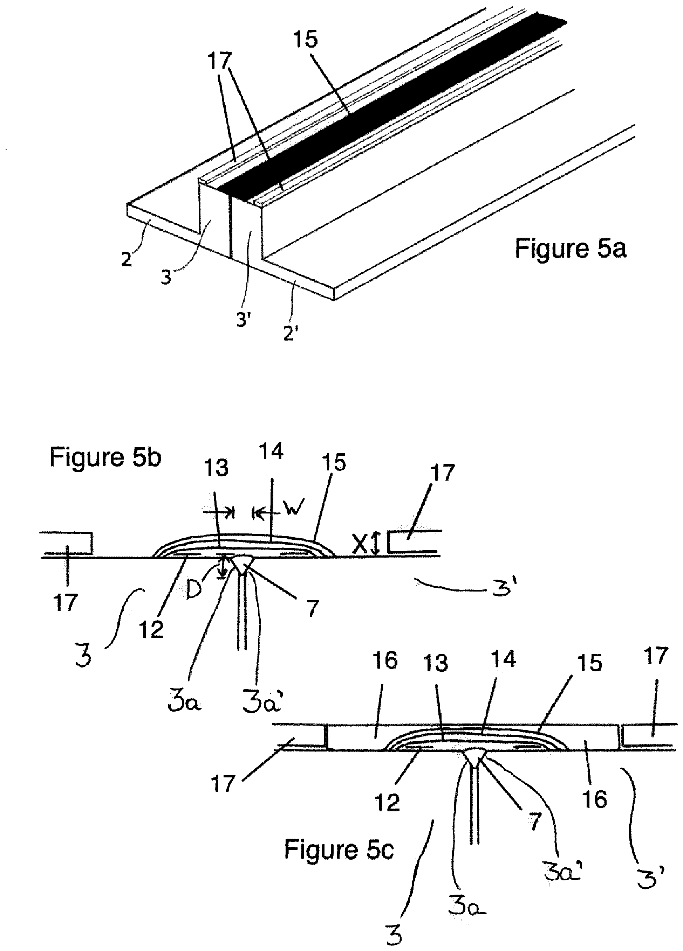

Referring now to Figures 4 and 5a to 5c, the area to each side of the interface 6 is prepared to key the surface and repaired if necessary. This may be done using any known technique. Preferably the preparation of the metal surfaces is to ST2 or ST3 standards which involves scraping, wirebrushing and sanding the surface. The prepared area preferably extends by at least a distance of around 50mm to each side of the interface 6. The whole of the vertical surface of each flange 3, 3' may be mechanically prepared in this way.

The full circumference of the interface 6 between the two flanges is then sealed by applying a bead of first sealant 7. As shown in the figures, the edges of the flanges 3, 3' may be chamfered 3a, 3a'. The bead of first sealant 7 fills the space between the abutting flanges formed by the chamfered edges, and may enter a space between the abutting flanges 3, 3' if such a space exists after tightening of the flange bolts 4, 4a. The bead of first sealant 7 may protrude beyond the inner surface of the flanges 3, 3' as shown in Figures 5a and 5b. As shown in Figure 5b, the bead of first sealant 7 has a width W and a depth D. The width W is typically 1 to 2mm and the depth D is also typically 1 to 2mm. The first sealant 7 should be frangible, so that it breaks if a gap develops between the two flanges 3, 3' and the vacuum will fail. If a bolt fails or stretches and a gap is present in a flange (as shown in Figures 2), then the stress in a wind turbine tower wall has been calculated at over 300 MPa (Siedel, M. (2018) Tolerance requirements for flange connections of wind turbine support structures, Stahlbau, 87:880-887). It therefore follows that the first sealant 7 must have a tensile strength of less than this value, preferably less than 50 MPa, so that this first sealant 7 fractures if a there is structural movement, for example caused by a bolt failing. Tensile strength is the maximum stress that a material can withstand before breaking. Examples of commercially available suitable first sealants include Alwfair^{™} LW Filler which has a tensile strength of 20 MPa at 20_{°}C, or Intergard821^{™} which has a tensile strength of 13 MPa at 20_{°}C. Advantageously, the first sealant is solvent free. The first sealant may be a two component sealant that is mixed prior to application, and may be a sealant that requires heating prior to application in order to reduce its viscosity. After application to the interface 6 the first sealant 7 is allowed to cure.

A prefabricated vacuum port plate is then installed by adhering it to the flange joint area, for example using a solvent free epoxy or similar product.

A layer of adhesive is then applied either side of the cured sealant 7. The layer of adhesive may be applied directly to the prepared metal surface. In the illustrated example, this is achieved by mounting sheet material 12, such as paper, that is either coated on both sides with adhesive or impregnated with adhesive such that both sides of the sheet material have adhesive properties. The sheet material 12 is attached to the structure both above and below the interface 6, leaving a space in the region of the first sealant 7.

For ease of use, the sheet material 12 is preferably supplied with peel off layers of material on each side of the material 12. In this way the material 12 may be supplied on a roll without the material adhering to itself. In the illustrated embodiment, the sheet material 12 is in the form of a tape. To apply the sheet material 12 to the prepared metal surface, sheet material 12 in the form of a roll of tape is attached to the structural elements above and below the interface 6.

Instead of using sheet material 12 in the form of a tape, a single piece of sheet material having an opening 12a therein may be used. The opening 12a may be formed by removing a piece of material from the sheet 12 after is attachment to the structural elements 2, 2', or by using a sheet material which has a preformed opening therein. This is particularly useful where it is desirable to monitor sections of the joint. Such a configuration allows the section of the joint where a bolt is defective to be identified.

To attach the sheet material to the structural element 2, 2', the peel off layer (if provided) is removed from one side thereof, and the material is placed onto the prepared surface of the joint. Where the sheet material is in the form of a tape, the tape is attached to the structural element 2, 2' so as to leave a small area of sealant covered surface to the outside of the tape, that is the other side of the tape to the interface 6. If both sides of the sheet 12 were covered with a peel off layer, the remaining peel off layer is removed.

Next a layer of mesh 13 is applied to the adhesive surface of the sheet material 12. The mesh 13 is prepared such that its peripheral shape and dimension matches substantially the peripheral shape and dimension formed by the spaced apart pieces of tape 12 or the sheet 12. It is this mesh 13 that provides the space which may be subject to a vacuum.

The mesh 13 is next covered with a layer of fluid impervious sheet material, which in the example is a layer of aluminium foil 14. The aluminium foil 14 may be prepared such that its peripheral shape and dimension is substantially the same as the shape and dimension of the mesh 13. The aluminium foil may be adhered to the mesh 13 with the each edge of the aluminium foil substantially co-terminus with the edge of the mesh 13, or the aluminium foil layer 14 may extend beyond the edge of the mesh 13 and adhere to the prepared surface of the flange.

In this example, the aluminium foil has adhesive on one side thereof and is this is covered with a peel off layer. Hence, the peel off layer is removed and the aluminium foil is applied and attached to the free surface of the mesh 13.

The foil 14 is then covered with a layer of cloth 15, which is glass fibre cloth in this example. The cloth 15 is attached to the foil 14 by adhesive, which in the example is provided as a covering to the glass fibre cloth 15. The glass fibre cloth may have a peel off layer covering the adhesive. If so, the peel off layer is removed and the adhesive face of the glass fibre cloth 15 is presented up to and pressed on to the foil 14. The glass fibre cloth may be prepared such that its shape and dimension matches the shape and dimension of the foil 14. The glass fibre cloth layer 15 may be adhered to the foil 14 with the each edge of the glass fibre cloth substantially co-terminus with the edge of the foil, or the glass fibre cloth layer 15 may extend beyond the edge of the foil 14 and adhere to the prepared surface of the flange.

The final step in creating the structure 11 involves applying a second sealant 16 to the glass fibre cloth 15 and around the cloth 15 to each side of the interface 6. The second sealant 16 seals the edges of the mesh and other layers of sheet material, such that all the components of the structure 11 are encapsulated in the second sealant 16. The second sealant 16 may be urethane for example, or an epoxy sealant. Advantageously, the second sealant is solvent free. The second sealant may be a two-component sealant that is mixed prior to application, and may be a sealant that requires heating prior to application in order to reduce its viscosity.

As can be seen from Figures 5a, 5b and 5c, a pair of formers 17 are preferably used to ensure an even depth of second sealant 16 is applied, by running a scraper over the surface of the formers. This also ensures that the edges of all sheet materials 12 to 15 are sealed. The depth X of the formers 17, and hence the second sealant, is preferably 2mm.

Referring to Figure 4, it can be seen that the mesh 13 is made up of strands of material 13a extending in one direction and strands of material 13b extending substantially perpendicularly to the strands 13a. The strands 13a and 13b lie in two different planes. Hence, an air space is formed between the lower surface of strands 13a and the upper surface of strands 13b.

In an alternative embodiment, the mesh 13 is formed such that its peripheral shape and dimension corresponds to the internal shape and dimension between the pieces of tape 12 or of the opening 12a. The mesh 13 is then placed within the opening 12a. The remaining layers are applied in the same manner as described above. Hence, peripheral shape and dimension of the layer 14 corresponds to the peripheral shape and dimension of the layer 12, and so on.

A vacuum system is connected to the interstitial space formed between the structure 11 and the first sealant 7.

The condition of the bolted flange joint 1 is monitored by monitoring the status of the vacuum. If the position of one structural element 2 changes relative to another 2' but a sufficient amount, for example by 1mm, then a crack will develop in either one of the layers of the structure 11 or in the first sealant 7 at the interface between the two structural elements, causing the negative pressure in the vacuum to rise and triggering an alarm. The alarm is an indication of one or more defective bolts.

The bolted flange joint sealing and monitoring apparatus of the invention is applied to only the inner surfaces of the bolted flange joints in a structure, which are easily accessed via internal stairs or ladder systems. No working at height is required to apply sealant to the outer surface of the bolted flange joints.

## Claims

1. The combination of a bolted flange joint sealing and monitoring apparatus and a bolted flange joint, the bolted flange joint comprising two flanges abutting one another at an interface, each flange having a series of holes therein, the holes of the two flanges of the joint aligned and receiving a bolt therein, and the abutting flanges providing an inner surface and an outer surface, wherein the sealing and monitoring apparatus provides a seal on the inner surface of the interface, and wherein the sealing and monitoring apparatus includes:
a) a first sealant applied to the interface on the inner surface, sealing said interface;
b) a first layer of sheet material overlying the first sealant and an area of the abutting flanges surrounding the sealed interface on the inner surface, the first layer of sheet material adapted to provide an air space;
c) a second layer of sheet material overlying the first layer of sheet material;
d) a second sealant overlying the second layer of sheet material such that the air space is air tight;
e) a vacuum source in fluid communication with the air space; and
f) vacuum monitoring means configured to monitor the status of a vacuum created in the air space;
wherein the first sealant is a frangible sealant.

2. The combination of a bolted flange joint sealing and monitoring apparatus and a bolted flange joint according to Claim 1, wherein the first sealant has a tensile strength at 20 degrees centigrade of: 50MPa or less; 20MPa out less; 13MPa or less and/or 10MPa or greater.

3. The combination of a bolted flange joint sealing and monitoring apparatus and a bolted flange joint according to Claim 1 or 2, further including: a third layer of sheet material situated between the first and second layers of sheet material; or a third layer of sheet material situated between the first and second layers of sheet material, wherein the third layer of sheet material is a fluid impervious foil; or a third layer of sheet material situated between the first and second layers of sheet material, wherein the third layer of sheet material is a fluid impervious foil and wherein the foil is an aluminium foil, or a plastics foil.

4. The combination of a bolted flange joint sealing and monitoring apparatus and a bolted flange joint according to any preceding claim, further comprising: a fourth layer of sheet material situated between the first layer of sheet material and the area of abutting flanges surrounding the interface, wherein the fourth layer of sheet material is attached to the sealant by adhesive; or further comprising: a fourth layer of sheet material situated between the first layer of sheet material and the area of abutting flanges surrounding the interface, wherein the fourth layer of sheet material is attached to the sealant by adhesive wherein the fourth layer of sheet material is either covered on opposing faces thereof with adhesive, or is impregnated with adhesive such that the opposing faces thereof have adhesive thereon.

5. The combination of a bolted flange joint sealing and monitoring apparatus and a bolted flange joint according to Claim 3 or 4, wherein at least one face of the third layer of sheet material is covered with adhesive.

6. The combination of a bolted flange joint sealing and monitoring apparatus and a bolted flange joint according to any preceding claim, wherein: the second layer of sheet material is a cloth; or the second layer of sheet material is a cloth and the cloth is a glass fibre cloth; or the second layer of sheet material is a cloth and is covered on one side with adhesive.

7. The combination of a bolted flange joint sealing and monitoring apparatus and a bolted flange joint according to: any preceding claim, wherein the peripheral edge of the first layer lies inside the peripheral edge of the second sealant overlying the second layer of sheet material; and/or wherein the peripheral edge of the second layer of sheet material is one of: co-terminus with the peripheral edge of the first layer of sheet material; or extends beyond the peripheral edge of the first layer of sheet material; and/or any of Claims 3 to 6, wherein the peripheral edge of the third layer of sheet material is one of: co-terminus with the peripheral edge of the first layer of sheet material; or extends beyond the peripheral edge of the first layer of sheet material.

8. The combination of a bolted flange joint sealing and monitoring apparatus and a bolted flange joint according to any of Claims 4 to 7, wherein the peripheral edge of the fourth layer of sheet material is one of: co-terminus with the peripheral edge of the first layer of sheet material; or extends beyond the peripheral edge of the first layer of sheet material.

9. The combination of a bolted flange joint sealing and monitoring apparatus and a bolted flange joint according to any preceding claim, wherein: the first sealant enters a gap between opposing faces of the two abutting flanges; and/or an inner edge of at least one of the abutting flanges is chamfered; and/or the first sealant is applied to the interface as a bead; or wherein: the first sealant is applied to the interface as a bead and wherein the bead is between up to 2mm wide and/or up to 2mm deep.

10. The combination of a bolted flange joint sealing and monitoring apparatus and a bolted flange joint according to Claim 9, wherein the bead of first sealant is situated in a space between the abutting flanges formed by the or each chamfered edge.

11. The combination of a bolted flange joint sealing and monitoring apparatus and a bolted flange joint according to any preceding claim, wherein the bolted flange joint is sealed only on said inner surface of said interface.

12. A structure comprising two structural elements and the combination of a bolted flange joint sealing and monitoring apparatus and a bolted flange joint according to any of Claims 1 to 11: the bolted flange joint connecting the structural elements; or the bolted flange joint connecting the structural elements and wherein the structure comprises three or more structural elements and a plurality of bolted flange joints, wherein each two adjacent structural elements of the three or more structural elements are connected together by a respective bolted flange joint, and wherein the air spaces provided by each respective sealing and monitoring apparatus are isolated from one another.

13. A method of fabricating a bolted flange joint sealing and monitoring apparatus on a bolted flange joint, the bolted flange joint comprising two flanges abutting one another at an interface, each flange having a series of holes therein, the holes of the two flanges of the joint aligned and receiving a bolt therein, and the abutting flanges providing an inner surface and an outer surface, the method comprising the steps of:
a) preparing inner surfaces of abutting flanges of a bolted flange joint;
b) applying a first sealant to the interface on the inner surface, sealing said interface, wherein the first sealant is a frangible sealant;
c) attaching a first layer of sheet material to the prepared inner surface, overlying the interface sealed by the first sealant following step b), wherein the first layer of sheet material is adapted to provide an air space;
d) attaching a second layer of sheet material such that it overlies the first layer of sheet material;
e) applying a layer of a second sealant over the second layer of sheet material, the layer of second sealant extending over the prepared flange surface to each side of the interface such that the air space provided by the first layer of sheet material is air tight; and
f) connecting a vacuum source to the air tight space formed about the first layer of sheet material.

14. A method according to Claim 13, wherein: the first sealant in step b) has a tensile strength of the first sealant has a tensile strength at 20 degrees centigrade of: 50MPa or less; 20MPa out less; 13MPa or less and/or 10MPa or greater; and/or a thickness of between 1mm and 2mm of second sealant is applied to the interface in step e); and/or the step of preparing the surface of the bolted flange joint includes the step of repairing the bolted flange joint; and/or further including the step of applying formers to the inner surface of the bolted flange joint to control the thickness of the layer of second sealant; and/or comprising the further step of applying a third layer of sheet material between the first and third layers of sheet material; and/or comprising the further step of applying a fourth layer of sheet material between the surface of the sealant applied to the prepared surface around the bolted flange joint and the first layer of sheet material .

15. A method of sealing and monitoring a bolted flange joint comprising the steps of forming the combination of a bolted flange joint sealing and monitoring apparatus and a bolted flange joint according to any of Claims 1 to 11: and monitoring the status of a vacuum in the bolted flange joint monitoring apparatus; or and monitoring the status of a vacuum in the bolted flange joint monitoring apparatus and the method comprising the further step of relaying the detected status of the vacuum to a remote monitoring station.
